Europäisches Patentamt

(19) European Patent Office

Office européen des brevets

(11) Numéro de publication : **0 054 495 B2**

## (12) NOUVEAU FASCICULE DE BREVET EUROPEEN

(45) Date de publication du nouveau fascicule du brevet : **06.03.91 Bulletin 91/10**

(51) Int. Cl.$^5$ : **C03C 13/04**

(21) Numéro de dépôt : **81401996.4**

(22) Date de dépôt : **15.12.81**

(54) **Guide d'onde optique à coeur dopé au fluor.**

Le dossier contient des informations techniques présentées postérieurement au dépôt de la demande et ne figurant pas dans le présent fascicule.

(30) Priorité : **16.12.80 FR 8026670**

(43) Date de publication de la demande : **23.06.82 Bulletin 82/25**

(45) Mention de la délivrance du brevet : **12.03.86 Bulletin 86/11**

(45) Mention de la décision concernant l'opposition : **06.03.91 Bulletin 91/10**

(84) Etats contractants désignés : **BE CH DE GB IT LI LU NL**

(56) Documents cités :
**EP-A- 0 027 223**
**EP-A- 0 028 155**
**EP-A- 0 046 281**
**FR-A- 2 208 127**

(56) Documents cités :
**FR-A- 2 379 826**
**GB-A- 1 391 177**
**GB-A- 2 062 611**
**US-A- 4 206 968**
**US-A- 4 210 386**
**NTG Fachberichte Band 59 (3 ECOC 1977), pages 12-14, VDE Verlag Berlin.**
**J. Electrochem. Soc. Aug. 1978, pages 1293-1302.**
**Applied Physics Letters, Vol. 31, n 8, 15.10.1977.**

(73) Titulaire : **QUARTZ ET SILICE**
**8, rue d'Anjou**
**F-75008 Paris (FR)**

(72) Inventeur : **Ranson, André**
**47, rue Henri Regnault**
**F-92500 Rueil Malmaison (FR)**
Inventeur : **Guerder, Pierre**
**Les Ouches-Vrigny**
**F-45300 Pithiviers (FR)**

(74) Mandataire : **Le Vaguerese, Sylvain Jacques**
**SAINT-GOBAIN RECHERCHE 39, quai Lucien Lefranc**
**F-93304 Aubervilliers Cedex (FR)**

EP 0 054 495 B2

## Description

## Description pour les Etats contractants : BE, CH, DE, GB, IT, LI, NL

La présente invention concerne les guides d'onde optique et plus particulièrement une catégorie de fibres optiques qui présentent une faible atténuation pour différentes longueurs d'onde réparties dans un large domaine spectral s'étendant du visible à l'infra-rouge.

Il existe déjà plusieurs catégories de fibres optiques obtenues par étirage d'un semi-produit siliceux ; les unes sont transparentes uniquement dans l'infra-rouge, les autres transparentes dans le visible et le proche ultra-violet, mais opaques dans le proche infra-rouge.

Ainsi il est connu de fabriquer de la silice en fondant des grains de quartz, mais celle-ci contient des traces de métaux tels que le fer ou le cuivre qui sont responsables de pertes par absorption trop importantes, principalement dans le proche infra-rouge, pour permettre une utilisation dans cette zone spectrale. Il est également connu de fabriquer de la silice synthétique par décomposition de $SiCl_4$ en présence d'oxygène.

Selon le procédé de fabrication employé on obtient différentes qualités de silice, dont la composition ainsi que les défauts de structure sont à l'origine de bandes d'absorption.

Cela ressort notamment de la lecture des articles suivants : P. Kaiser, A.R. Tynes, H.W. Astle, A.D. Pearson, W.G. French, R.E. Jaeger et A.H. Cherin – J. Opt. Soc. Am., 63, 1141 (1973) ; E.J. Friebele, G.H. Sigel, D.L. Griscom – 2ème Colloque Européen sur les fibres optiques – Paris (Septembre 1976) ; E.J. Friebele, R.J. Ginther, G. H. Sigel – Appl. Phys. Lett., 24, 412 (1974).

Par ces documents il est connu que la silice peut être affectée de différents types de défauts de structure : ceux-ci sont créés soit au moment de la formation de la fibre par étirage mécanique du verre en masse, soit lentement à température ambiante, ou encore instantanément lors d'un traitement thermique ou d'une irradiation.

Le seul remède connu est, semble-t-il, l'incorporation dans la silice de groupes hydroxyles OH en quantité non négligeable. Ces groupes permettent d'éviter la formation de défauts ou de contribuer à leur rapide disparition dès leur création.

Si ce remède est suffisant pour obtenir des fibres optiques dont l'atténuation est satisfaisante en particulier aux longueurs d'onde voisines de 630 nm, l'absorption provoquée par les ions OH à 950 nm et aux plus grandes longueurs d'onde constitue un inconvénient majeur.

A l'inverse, les fibres optiques dont la teneur en ions OH est extrèmement faible (inférieure à 5 parties par million ou ppm) ne sont pas utilisables aux longueurs d'onde inférieures à 640 nm, car elles sont altérées lors de leur formation.

Il est également connu d'après la demande de brevet européen EP-A-0 046 281 publiée après la date de dépôt de la présente demande, de fabriquer une fibre optique à partir d'une préforme comportant plusieurs zones formées de silice synthétique dopée au fluor, l'une de ces zones comprenant un élément qui augmente l'indice de réfraction de la silice et dont la concentration décroît radialement depuis l'axe de ladite préforme. Aucune indication n'est donnée quant au mode de répartition du fluor, sauf à travers un exemple: ce dernier divulgue la réalisation d'une préforme qui comprend une gaine formée de silice pure dopée par du fluor selon une concentration constante et régulière, et un coeur formé de silice dopée simultanément par du fluor et du germanium, le premier à raison de 0,6% en poids de manière régulière, le second selon une concentration qui décroît de 12% dans l'axe de la fibre à 0% en poids à la limite de la gaine.

Ce document indique simplement que, dans le procédé de dépôt de couches de verre sur la paroi interne d'un tube, selon lequel les concentrations des couches de verre sont choisies de façon à obtenir un profil d'indice de réfraction préalablement déterminé, l'injection permanente d'un composé fluoré dans le milieu réactif permet d'éviter des fluctuations de concentration non désirées et responsables des fluctuations d'indice.

Par le brevet français FR-A-2 208 127 il est connu de fabriquer une fibre optique dont la partie optiquement active est constituée d'une couche en silice synthétique pure. Le fluor n'est jamais introduit dans les couches dont l'indice de réfraction est le plus élevé ; son seul rôle est de diminuer l'indice de réfraction de la silice.

D'après le brevet américain US-A-4 210 386 on sait obtenir une fibre optique à partir de verres silicatés contenant du fluor. Dans un premier temps on élabore le verre choisi selon des méthodes de fusion classiques, puis on fabrique un tube à partir du verre obtenu. Dans un deuxième temps on soumet ce tube à un traitement thermique afin de volatiliser le fluor à partir des surfaces interne et externe dudit tube. Dans un troisième temps le tube est chauffé jusqu'au ramolissement pour être transformé par écrasement en une préforme, qui est à son tour chauffée et étirée pour obtenir la fibre désirée.

Toutes ces opérations n'ont pour but que de faire varier radialement la concentration en fluor afin d'obte-

EP 0 054 495 B2

nir le gradient d'indice désiré. Là encore le fluor n'est utilisé que pour son influence bien connue sur l'indice de réfraction des verres silicatés. La répartition uniforme du fluor dans le coeur d'une fibre optique, dont l'indice de réfraction reste constant, n'est ni recherchée, ni suggérée bien au contraire.

Les articles parus dans NTG-FACHBERICHTE, volume 59, 3 ECOC 1977, pages 12-14 ; VDE-Verlag BERLIN 1977 et dans le Journal of the Electrochemical Society, volume 125, n°8, August 1978, pages 1298-1302, décrivent la fabrication de préformes obtenues par le dépôt de couches successives de silice dopée sur la paroi interne d'un tube de silice, puis par ramollissement et écrasement du tube ; la silice dopée est formée à partir d'un mélange gazeux $SiCl_4$, $SiF_4$ et $O_2$. Ces préformes, à saut ou à gradient d'indice de réfraction, présentent des concentrations décroissantes de fluor depuis leur surface jusqu'à leur axe. Le chauffage du tube, lors de l'opération de ramollissement puis d'écrasement, provoque l'évaporation du fluor contenu dans les couches proches de la surface interne du tube. La partie centrale de la préforme présente de ce fait une variation de l'indice de réfraction. La fibre optique, qui résulte de l'étirage de telles préformes, présente également la même variation d'indice.

La demande de brevet EP-A-0 028 155 appartenant à l'état de la technique selon l'article 54 (3), décrit une fibre optique monomode dont le coeur est susceptible de contenir du fluor, afin de pouvoir augmenter la concentration en oxyde de germanium. La concentration et le mode de répartition du fluor ne sont pas précisés. La fibre est obtenue par étirage d'une préforme réalisée à partir d'un tube, dans des conditions similaires à celles décrites dans les deux articles cités précédemment.

La présente invention a pour objet une fibre optique polyvalente dont le coeur n'est pas ou du moins est peu sensible aux différents défauts, connus, et qui peut être utilisée aussi bien dans le proche infra-rouge que dans le visible.

On atteint les buts de l'invention en utilisant pour former le coeur de la fibre optique un verre de silice synthétique dopée au fluor, pratiquement exempte de groupes hydroxyles.

Selon l'invention, le coeur de la fibre optique, dont l'indice de réfraction est supérieur à celui des zones qui l'entourent, est constitué de silice synthétique pratiquement exempte de groupes hydroxyles et est caractérisé en ce qu'il contient une concentration uniforme en fluor et présente un indice de réfraction constant.

Selon l'un des modes de réalisation de l'invention, la silice synthétique dopée formant le coeur de la fibre optique est uniquement dopée au fluor.

Selon un autre mode de réalisation de l'invention, le verre de silice synthétique dopée formant le coeur de la fibre optique comprend au moins un oxyde augmentant l'indice de réfraction, ainsi que du fluor.

La silice synthétique, qui est le constituant principal du verre formant la totalité du coeur de la fibre optique selon l'invention, peut être fabriquée par tout procédé susceptible de permettre son dopage par l'incorporation contrôlée de fluor en quantité suffisante.

Elle peut être fabriquée par exemple par la décomposition thermique simultanée d'au moins un composé de silicium et un composé fluoré, en présence d'oxygène contenu dans un courant gazeux exempt d'hydrogène, lesdits composés étant mélangés ou non préalablement à leur injection dans la zone réactionnelle.

Elle peut être également fabriquée dans des conditions sensiblement identiques en ajoutant au mélange réactionnel précédent au moins un élément, qui, incorporé dans la silice finalement obtenue, aura pour effet d'augmenter l'indice de réfraction de cette dernière.

Le procédé de fabrication préféré consiste essentiellement à décomposer dans la flamme d'un brûleur à plasma inductif les composés mentionnés précédemment, à les faire réagir avec l'oxygène contenu dans le gaz d'alimentation du brûleur pour former la silice dopée et la déposer sous forme de masse vitreuse sur un support stable à la chaleur.

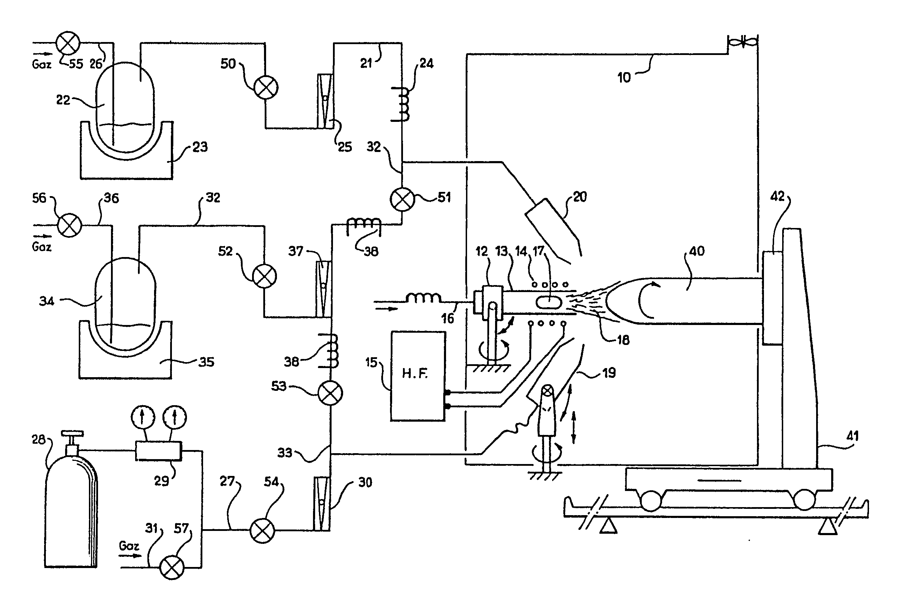

Les caractéristiques et les avantages des fibres selon l'invention ressortiront de la description détaillée ci-après, s'appuyant notamment sur la figure qui représente schématiquement une installation de fabrication de la silice dopée qui servira de coeur auxdites fibres.

Dans le dispositif schématisé sur la figure, une enceinte pratiquement close 10 abrite de l'atmosphère ambiante le brûleur à plasma. Ce brûleur, porté sur un support réglable 12 qui permet de faire varier son orientation, comprend un tube de silice 13 entouré d'une bobine d'induction 14 reliée électriquement à un générateur 15. Il est avantageux d'opérer avec un générateur haute tension (10 kilovolts) et haute fréquence (2 mégahertz). Le tube de silice possède une extrémité fermée munie d'un ajutage 16 par lequel on introduit le ou les gaz plasmagènes tels que l'air, l'oxygène, l'argon, le protoxyde d'azote ou leurs mélanges. Il est impératif, néanmoins, de choisir un mélange de gaz contenant de l'oxygène libre ou combiné, pour assurer la formation chimique de $SiO_2$.

L'amorçage du brûleur à plasma est réalisé selon la méthode classique, en envoyant tout d'abord un courant gazeux d'argon par l'ajutage 16 et en introduisant dans le champ de la bobine d'induction une tige

3

métallique reliée à la masse. L'argon est ensuite remplacé le plus rapidement possible par le gaz plasmagène choisi. Dans le tube de silice 13 prend alors naissance un plasma 17 qui se termine à l'extérieur par une «flamme» 18 atteignant des températures très élevées, de l'ordre de 10000°C.

Deux ajutages 19 et 20 sont disposés à l'extérieur du brûleur à plasma, de préférence de chaque côté du tube de silice 13 et transversalement à la flamme. Lesdits ajutages, dirigés vers la flamme, sont avantageusement fixés sur un support permettant de les orienter à volonté, comme représenté sur la figure pour l'ajutage 19.

L'ajutage 20 est relié par l'intermédiaire de la tubulure 21 à un évaporateur 22 contenant un composé de silicium, par exemple du tétrachlorure de silicium à l'état liquide, que l'on chauffe à l'aide du dispositif de chaufage 23. On place autour de la tubulure 21 une résistance chauffante 24 pour éviter la condensation des vapeurs de tétrachlorure de silicium qui y circulent. Un débit-mètre 25 intercalé sur le circuit indique la quantité de tétrachlorure évaporée par unité de temps. Les vapeurs de $SiCl_4$ sont entraînées, à travers l'ajutage 20, vers la flamme du plasma, par un gaz vecteur arrivant par la tubulure 26 vers l'évaporateur 22. Ce gaz vecteur est de préférence de l'oxygène mais peut être également de l'azote ou de l'argon si le gaz plasmagène est très riche en oxygène.

L'ajutage 19 est relié par l'intermédiaire de la tubulure 27 à un réservoir 28 contenant un produit fluoré sous pression ; la silice fluorée peut être obtenue avec un bon rendement en utilisant de préférence un composé minéral du fluor tel que l'hexafluorure de soufre $SF_6$, le trifluorure d'azote $NF_3$, ou leurs mélanges. La tubulure 27 est munie d'un manodétendeur 29 et d'un débit-mètre 30.

En outre, on peut introduire un gaz vecteur tel que de l'oxygène sec par la tubulure 31.

Les ajutages 19 et 20 sont également reliés par les tubulures 32 et 33 à un évaporateur 34 contenant un composé d'un élément augmentant l'indice de réfraction de la silice ; ce composé peut être un composé de titane, par exemple le tétrachlorure de titane $TiCl_4$.

Cet évaporateur 34, chauffé par un dispositif 35, est relié en amont par la tubulure 36 à une source de gaz vecteur, entraînant les vapeurs de $TiCl_4$ : la composition de ce gaz est identique à celle du gaz arrivant par la tubulure 26. Un débit-mètre 37 indique la quantité de tétrachlorure évaporé par unité de temps. Des résistances chauffantes 38 permettent d'éviter la condensation des vapeurs de $TiCl_4$ sur les parois des tubulures 32 et 33.

Le ou les gaz vecteurs, de même que le ou les gaz plasmagènes doivent être rigoureusement secs.

L'élaboration du lingot de silice contenant du fluor est effectuée par dépôt axial de ladite silice sur une ébauche 40 de silice vitreuse de qualité ordinaire. Cette ébauche est portée par un dispositif mobile 41, qui comprend des organes permettant de la placer devant la flamme 18, et de la déplacer en translation par rapport à celle-ci ; elle est de plus entraînée en rotation pendant toute la durée de l'opération par un montage mécanique de type connu comportant un mandrin 42. Cette rotation est nécessaire pour obtenir un lingot cylindrique de diamètre régulier.

Pour obtenir un dépôt de verre homogène et transparent il est important d'opérer dans des conditions stables, en conservant notamment les vitesses de translation et de rotation de l'ébauche.

Par l'ouverture et la fermeture appropriées des vannes 50 à 57, il est possible de réaliser au choix, par croissance axiale sur l'ébauche 40, une silice simplement dopée au fluor ou une silice enrichie par l'oxyde d'un élément augmentant son indice de réfraction, ainsi qu'une quantité contrôlée de fluor.

La longueur du lingot finalement obtenu est comprise entre 30 et 100 centimètres et son diamètre entre 70 et 90 millimètres. Si le lingot est formé d'une silice enrichie par l'oxyde d'un élément augmentant son indice de réfraction, il est possible, dans une deuxième phase, de le recouvrir par un dépôt radial de silice simplement dopée au fluor puis une couche de protection en silice pure. Ceci est obtenu en montant le lingot sur un tour verrier qui l'entraîne en rotation tout en se déplaçant par un mouvement de va-et-vient, perpendiculairement à la flamme du plasma.

Le lingot est ultérieurement placé dans un four d'étirage vertical pour être transformé en baguettes transparentes de plusieurs mètres de long et dont le diamètre peut être choisi entre 10 et 20 millimètres. Ces baguettes à leur tour, après un nettoyage soigné de leur surface, sont étirées par des moyens connus sous forme de fibres de 0,125 à 1 millimètre de diamètre.

Les fibres optiques selon l'invention sont illustrées ci-après par des exemples pris dans deux catégories de fibres : celles présentant un revêtement «plastique» et celles entièrement en verres de différentes compositions.

Appartiennent à la première catégorie des fibres étirées à partir de lingots de silice dopée uniquement au fluor, selon des teneurs pondérales comprises entre 0,2 et 1%. Le coeur des fibres, constitué de silice contenant un pourcentage uniforme de fluor, est simplement entouré, selon une méthode connue en soi, d'une gaine de résine silicone classique gainée à son tour par un revêtement de protection.

Des fibres de ce type, référencées F1, F2, F3, F4, dans le tableau I, contiennent respectivement 0,2%-0,45%-0,8%-1% de fluor (exprimés en pourcentages pondéraux). Le coeur de ces fibres d'un diamètre de 200 µm est recouvert par une couche de résine silicone de 50 µm, recouverte à son tour par un revêtement de protection dont l'épaisseur est de 150 µm.

Ces fibres sont comparées à des fibres classiques, désignées par A et B, gainées de la même manière et dont le coeur est constitué respectivement de silice synthétique pratiquement pure contenant environ 30 ppm (parties par million) : de groupes hydroxyles et de silice synthétique contenant entre 200 et 250 ppm de groupes hydroxyles.

Le tableau I ci-après rassemble les valeurs initiales de l'atténuation présentée par ces fibres, en dB/km, pour différentes longueurs d'onde.

Tableau I

|  | A | B | F1 | F2 | F3 | F4 |
|---|---|---|---|---|---|---|
| 630 nm | 25 | 15 | 20 | 17 | 11 | 10 |
| 800 nm | 4,8 | 5 | 3,5 | 4,5 | 4 | 3,5 |
| 820 nm | 4,9 | 5,1 | 3,5 | 3,2 | 3,2 | 3 |
| 945 nm | 35 | >50 | 25,4 | 24,5 | 16,8 | 7,5 |
| 1050 nm | 5,6 | 8 | 4,3 | 5,7 | 6,8 | 5,1 |

La lecture de ce tableau appelle plusieurs remarques.

Tout d'abord la comparaison entre les fibres A et B montre que la présence d'ions OH dans la silice synthétique diminue fortement l'atténuation à 630 nm, confirmant ainsi les résultats ou les hypothèses déjà connus ; que, d'autre part, les mêmes ions OH provoquent une absorption à 945 nm d'autant plus marquée que leur concentration augmente, phénomène également bien connu.

La comparaison entre les fibres de l'invention et les fibres A et B montre que le fait d'incorporer du fluor dans la silice synthétique a un double effet :

– alors que la fibre A et les fibres F1 à F4 ont été étirées à partir de lingots fabriqués dans des conditions identiques, on constate, d'après les atténuations mesurées à 945 nm, que la teneur en OH décroît considérablement au fur et à mesure que la teneur en fluor augmente ;

– on constate également, d'après les atténuations mesurées à 630 nm, que l'incorporation du fluor a pour effet de réduire, voire de supprimer les défauts apparaissant normalement lors de l'étirage d'une silice contenant peu ou pas d'ions OH. Il est également remarquable que cet effet s'observe malgré la diminution de la teneur en OH.

Au-dessus de 1% de fluor l'influence de cet élément sur l'atténuation devient négligeable, notamment à 630 nm où pour la fibre F4 les pertes mesurées sont dues pour l'essentiel à la diffusion Rayleigh.

Les fibres selon l'invention présentent une résistance remarquable à l'action de tous les rayonnements ionisants, ou plus exactement, recouvrent rapidement leurs propriétés initiales. Cela est mis en évidence par l'expérience suivante réalisée, à titre d'exemple, sur les fibres précédemment décrites.

Les fibres classiques A et B ainsi que les fibres F1, F2 et F4 ont été exposées pendant une heure à un rayonnement γ (source de cobalt 60). La dose moyenne reçue par les fibres à l'issue de cette exposition a été de l'ordre de 100000 rads. Le tableau suivant montre l'évolution de l'atténuation en fonction du temps immédiatement après la fin de ce traitement. Les valeurs figurant dans ce tableau sont exprimées en dB/km et résultent de mesures effectuées à 800 nm.

Tableau II

|  | A | B | F1 | F2 | F4 |
|---|---|---|---|---|---|
| + 2 nm | >550 | ~215 |  |  | ~120 |
| + 5 nm | >550 |  |  |  | ~ 85 |
| + 15 nm | >550 |  |  |  | ~ 80 |
| + 30 nm | >550 | ~200 |  | ~120 | ~ 75 |
| + 60 nm | >550 | ~190 | ~125 | ~100 | ~ 40 |

Aussitôt après la fin de l'exposition au rayonnement ionisant les fibres se distinguent par des atténuations très différentes ; on retrouve l'effet bénéfique des ions OH décrit dans l'art antérieur (comparaison A, B) mais surtout on observe sur les fibres selon l'invention une diminution très rapide de l'atténuation. Cette évolution est d'autant plus marquée que la teneur en fluor est plus élevée.

Dans le domaine des fibres optiques comprenant un coeur en silice synthétique dopée par un oxyde augmentant l'indice de réfraction, entourée d'une ou plusieurs couches de verres de silice de compositions différentes, les fibres optiques selon l'invention se distinguent aussi par des propriétés remarquables.

Ainsi il est connu d'utiliser dans le proche infra-rouge des fibres optiques dont le coeur est constitué de silice dopée au titane, car elles présentent une faible atténuation dans les gammes de longueurs d'onde comprises entre 1000 et 1200 nm et entre 1500 et 1700 nm.

Ces fibres présentent par contre une atténuation trop importante au-dessous de 800 nm pour être utilisées dans le domaine des faibles longueurs d'onde.

Les propriétés de ces fibres peuvent être partiellement améliorées grâce à une traitement thermique qui consiste à les soumettre à une température supérieure à 150°C pendant plusieurs jours.

Ce traitement a pour effet d'améliorer sensiblement la transmission desdites fibres entre environ 700 et 800 nm, mais présente toutefois l'inconvénient de faire apparaître une bande d'absorption intense, centrée sur 950 nm, et s'étendant de 800 à 1100 nm.

Ainsi que le montrent les exemples décrits ci-après les fibres optiques selon l'invention échappent pour l'essentiel aux inconvénients précités.

Des fibres référencées TF1 et TF2 dans le tableau suivant comprennent un coeur de silice synthètique dopée simultanément par du titane et du fluor recouvert par une couche de silice uniquement dopée au fluor, cette dernière étant à son tour recouverte d'une couche de silice non dopée servant uniquement à la protection mécanique de la fibre. Le coeur, d'un diamètre de 200 µm, est recouvert d'une première couche de 45 µm d'épaisseur.

Le coeur de ces fibres contient respectivement 0,2% de fluor associé à 2,25% de $TiO_2$ (TF1) et 0,4% de fluor associé à 1,55% de $TiO_2$ (TF2), l'ensemble étant exprimé en pourcentages pondéraux.

Les fibres selon l'invention sont comparées à une fibre connue, référencée C, dont le coeur est constitué de silice synthétique dopée par 3% en poids de $TiO_2$.

Le tableau III ci-après rassemble les valeurs de l'atténuation (en dB/km) présentée par ces fibres avant et après un traitement thermique à différentes longueurs d'onde. Ce traitement a consisté à soumettre ces fibres à des températures supérieures ou égales à 170°C pendant au moins 3 jours.

Tableau III

| | C | | TF1 | | TF2 | |
|---|---|---|---|---|---|---|
| | vierges | traitées | vierges | traitées | vierges | traitées* |
| 630 nm | >100 | >100 | 50 | 10 | 35 | 17 |
| 800 nm | 30 | 12,5 | 11 | 8,5 | 22 | 12 |
| 950 nm | 20 | >100 | 27 | 40 | 33 | 25 |
| de 1100 à 1200 nm (valeur moyenne) | 10 | 8 | 6 | 7 | 7 | 3,5 |
| 1300 nm | >100 | >100 | 15 | 16 | 12 | 5 |
| 1600 nm | 11 | 7,5 | 6,5 | 1,7 | | 2 |

* Les valeurs de l'atténuation présentée par la fibre TF2 après traitement thermique sont obtenues après correction des pertes dues aux microcourbures.

La fibre C présente quelques zones d'atténuation moyenne ou faible enserrées entre des pics d'absorption forte ou très forte centrés sur 630, 945 et 1350 nm.

Comparativement à elle ce tableau met en évidence la transparence remarquable des fibres selon l'invention.

Les fibres selon l'invention se distinguent par des zones plus nombreuses et plus larges d'atténuation faible ou très faible, surtout après traitement thermique. Ainsi l'absorption à 630 nm due aux défauts apparaissant lors du fibrage décroit considérablement pour disparaître pratiquement après traitement thermique; l'absorption à 950 nm est beaucoup moins marquée. Il apparaît à 1300 nm une nouvelle zone se caractérisant par une atténuation suffisamment faible pour permettre l'utilisation de cette longueur d'onde. D'une façon générale toutes les atténuations sont réduites pour atteindre parfois des valeurs extrêmement faibles.

L'action du fluor est manifeste même pour de faibles pourcentages ; il est ainsi possible d'obtenir une amélioration substantielle des propriétés de la silice de coeur sans subir les inconvénients entraînés par des teneurs trop fortes en fluor, à savoir un écart trop faible entre les indices de réfraction du coeur et de la couche qui l'entoure.

6

EP 0 054 495 B2

La concentration en titane et en fluor du coeur des fibres optiques TF1 et TF2, données à titre d'exemples non limitatifs, est uniforme.

D'une façon générale l'équilibre entre l'élément dopant augmentant l'indice de réfraction de la silice de coeur et le fluor est à déterminer en fonction de la nature dudit élément et des caractéristiques désirées pour la fibre.

Il est bien évident que si la description précédente a privilégié les fibres de transmission optique, la présente invention s'applique à tout guide d'onde optique dont la structure est similaire.

## Revendications

### Revendications pour les Etats Contractants : BE, CH, DE, GB, IT, LI, NL

1. Guide d'onde optique formé d'un coeur dont l'indice de réfraction est supérieur à l'indice de réfraction des zones qui l'entourent, constitué d'un verre de silice synthétique pratiquement exempte de groupes hydroxyles, caractérisé en ce que ledit coeur contient une concentration uniforme de fluor et présente un indice de réfraction constant.

2. Guide d'onde optique selon la revendication 1, caractérisé en ce que le coeur dudit guide d'onde est constitué d'un verre contenant exclusivement de la silice et du fluor.

3. Guide d'onde optique selon la revendication 2, caractérisé en ce que le pourcentage de fluor incorporé dans la silice est au moins égal à 0,5% en poids et de préférence supérieur ou égal à 0,8% en poids.

4. Guide d'onde optique selon la revendication 1, caractérisé en ce que le verre à base de silice synthétique formant le coeur dudit guide d'onde contient au moins un oxyde d'un élément qui augmente l'indice de réfraction dudit verre.

5. Guide d'onde optique selon la revendication 4, caractérisé en ce que l'élément augmentant l'indice de réfraction du verre formant le coeur dudit guide d'onde est le titane.

6. Guide d'onde optique selon la revendication 5, caractérisé en ce que le pourcentage de fluor incorporé est de préférence inférieur ou égal à 0,5% en poids.

## Claims

### Claims for the Contracting States : BE, CH, DE, GB, IT, LI, NL

1. Optical waveguide formed from a core, whose refractive index is greater than the refractive index of the zones surrounding it, constituted by a synthetic silica glass substantially free from hydroxyl groups, characterized in that said core contains a uniform fluorine concentration and has a constant refractive index.

2. Optical waveguide according to claim 1, characterized in that the core of said waveguide is constituted by a glass containing solely silica and fluorine.

3. Optical waveguide according to claim 2, characterized in that the fluorine percentage incorporated into the silica is at least equal to 0.5% by weight and preferably is equal to or greater than 0.8% by weight.

4. Optical waveguide according to claim 1, characterized in that the synthetic silica-based glass forming the core of said waveguide contains at least one oxide of an element increasing the refractive index of the glass.

5. Optical waveguide according to claim 4, characterized in that the element increasing the refractive index of the glass forming the core of the waveguide is titanium.

6. Optical waveguide according to claim 5, characterized in that the incorporated fluorine percentage is preferably equal to or below 0.5% by weight.

## Ansprüche

### Ansprüche : BE, CH, DE, GB, IT, LI, NL

1. Lichtwellenleiter mit einem Kern, dessen Brechungskoeffizient größer als der Brechungskoeffizient der den Kern umgebenden Zonen ist, welcher aus einem praktisch hydroxylgruppenfreien Glas aus synthetischer Kieselsäure gebildet ist, **dadurch gekennzeichnet**, daß der Kern eine gleichmäßige Fluorkonzentration enthält und einen konstanten Brechungskoeffizienten aufweist.

7

2. lichtwellenleiter nach Anspruch 1, **dadurch gekennzeichnet,** daß der Kern des Wellenleiters aus einem Glas besteht, welches ausschließlich Kieselsäure und Fluor enthält.

3. Lichtwellenleiter nach Anspruch 2, **dadurch gekennzeichnet,** daß der Prozentgehalt an Fluor, welches in der Kieselsäure eingebaut ist, mindestens gleich 0,5 Gew.-% und vorzugsweise höher oder gleich 0,8 Gew.-% beträgt.

4. Lichtwellenleiter nach Anspruch 1, **dadurch gekennzeichnet,** daß das den Kern des Lichtwellenleiters bildende Glas auf der Basis von synthetischer Kieselsäure wenigstens ein Oxid eines den Brechungskoeffizienten des Glases erhöhenden Elements enthält.

5. Lichtwellenleiter nach Anspruch 4, **dadurch gekennzeichnet,** daß das den Brechungskoeffizienten des den Kern des Wellenleiters bildenden Glases erhöhende Element Titan ist.

6. Lichtwellenleiter nach Anspruch 5, **dadurch gekennzeichnet,** daß der Prozentgehalt von eingebautem Fluor vorzugsweise weniger oder gleich 0,5 Gew.-% beträgt.

## Description

### Description pour l'Etat Contractant : LU

La présente invention concerne les guides d'onde optique et plus particulièrement une catégorie de fibres optiques qui présentent une faible atténuation pour différentes longueurs d'onde réparties dans un large domaine spectral s'étendant du visible à l'infra-rouge.

Il existe déjà plusieurs catégories de fibres optiques obtenues par étirage d'un semi-produit siliceux ; les unes sont transparentes uniquement dans l'infra-rouge, les autres transparentes dans le visible et le proche ultra-violet, mais opaques dans le proche infra-rouge.

Ainsi il est connu de fabriquer de la silice en fondant des grains de quartz, mais celle-ci contient des traces de métaux tels que le fer ou le cuivre qui sont responsables de pertes par absorption trop importantes, principalement dans le proche infra-rouge, pour permettre une utilisation dans cette zone spectrale. Il est également connu de fabriquer de la silice synthétique par décomposition de $SiCl_4$ en présence d'oxygène.

Selon le procédé de fabrication employé on obtient différentes qualités de silice, dont la composition ainsi que les défauts de structure sont à l'origine de bandes d'absorption.

Cela ressort notamment de la lecture des articles suivants : P. Kaiser, A.R. Tynes, H.W. Astle, A.D. Pearson, W.G. French, R.E. Jaeger et A.H. Cherin – J. Opt. Soc. Am., 63, 1141 (1973) ; E.J. Friebele, G.H. Sigel, D.L. Griscom – 2ème Colloque Européen sur les fibres optiques – Paris (Septembre 1976) ; E.J. Friebele, R.J. Ginther, G. H. Sigel – Appl. Phys. Lett., 24, 412 (1974).

Par ces documents il est connu que la silice peut être affectée de différents types de défauts de structure : ceux-ci sont créés soit au moment de la formation de la fibre par étirage mécanique du verre en masse, soit lentement à température ambiante, ou encore instantanément lors d'un traitement thermique ou d'une irradiation.

Le seul reméde connu est, semble-t-il, l'incorporation dans la silice de groupes hydroxyles OH en quantité non négligeable. Ces groupes permettent d'éviter la formation de défauts ou de contribuer à leur rapide disparition dès leur création.

Si ce remède est suffisant pour obtenir des fibres optiques dont l'atténuation est satisfaisante en particulier aux longueurs d'onde voisines de 630 nm, l'absorption provoquée par les ions OH à 950 nm et aux plus grandes longueurs d'onde constitue un inconvénient majeur.

A l'inverse, les fibres optiques dont la teneur en ions OH est extrèmement faible (inférieure à 5 parties par million ou ppm) ne sont pas utilisables aux longueurs d'onde inférieures à 640 nm, car elles sont altérées lors de leur formation.

Par le brevet français FR-A-2 208 127 il est connu de fabriquer une fibre optique dont la partie optiquement active est constituée d'une couche en silice synthétique pure. Le fluor n'est jamais introduit dans les couches dont l'indice de réfraction est le plus élevé ; son seul rôle est de diminuer l'indice de réfraction de la silice.

D'après le brevet américain US-A-4 210 386 on sait obtenir une fibre optique à partir de verres silicatés contenant du fluor. Dans un premier temps on élabore le verre choisi selon des méthodes de fusion classiques, puis on fabrique un tube à partir du verre obtenu. Dans un deuxième temps on soumet ce tube à un traitement thermique afin de volatiliser le fluor à partir des surfaces interne et externe dudit tube. Dans un troisième temps le tube est chauffé jusqu'au ramolissement pour être transformé par écrasement en une préforme, qui est à son tour chauffée et étirée pour obtenir la fibre désirée.

Toutes ces opérations n'ont pour but que de faire varier radialement la concentration en fluor afin d'obtenir le gradient d'indice désiré. Là encore le fluor n'est utilisé que pour son influence bien connue sur l'indice de réfraction des verres silicatés. La répartition uniforme du fluor dans le coeur d'une fibre optique n'est ni recherchée, ni suggérée bien au contraire.

Les articles parus dans NTG-FACHBERICHTE, volume 59, 3 ECOC 1977, pages 12-14, VDE-Verlag BERLIN 1977 et dans le Journal of the Electrochemical Society, volume 125, n° 8, August 1978, pages 1298-1302, décrivent la fabrication de préformes obtenues par le dépôt de couches successives de silice dopée sur la paroi interne d'un tube de silice, puis par ramollissement et écrasement du tube ; la silice dopée est formée à partir d'un mélange gazeux SiCl$_4$, SiF$_4$ et O$_2$. Ces préformes, à saut ou à gradient d'indice de réfraction, présentent des concentrations décroissantes de fluor depuis leur surface jusqu'à leur axe. Le chauffage du tube, lors de l'opération de ramollissement puis d'écrasement, provoque l'évaporation du fluor contenu dans les couches proches de la surface interne du tube. La partie centrale de la préforme présente de ce fait une variation de l'indice de réfraction. La fibre optique, qui résulte de l'étirage de telles préformes, présente également la même variation d'indice.

La présente invention a pour objet une fibre optique polyvalente dont le coeur n'est pas ou du moins est peu sensible aux différents défauts connus, et qui peut être utilisée aussi bien dans le proche infra-rouge que dans le visible.

On atteint les buts de l'invention en utilisant pour former le coeur de la fibre optique un verre de silice synthétique dopée au fluor, pratiquement exempte de groupes hydroxyles.

Selon l'invention, le coeur de la fibre optique, dont l'indice de réfraction est supérieur à l'indice de réfraction des zones qui l'entourent, est formé de silice synthétique contenant du fluor mais pratiquement exempte de groupes hydroxyles et se caractérise par une répartition uniforme du fluor.

Selon l'un des modes de réalisation de l'invention, la silice synthétique dopée formant le coeur de la fibre optique est uniquement dopée au fluor.

Selon un autre mode de réalisation de l'invention, le verre de silice synthétique dopée formant le coeur de la fibre optique comprend au moins un oxyde augmentant l'indice de réfraction, ainsi que du fluor.

La silice synthétique, qui est le constituant principal du verre formant la totalité du coeur de la fibre optique selon l'invention, peut être fabriquée par tout procédé susceptible de permettre son dopage par l'incorporation contrôlée de fluor en quantité suffisante.

Elle peut être fabriquée par exemple par la décomposition thermique simultanée d'au moins un composé de silicium et un composé fluoré, en présence d'oxygène contenu dans un courant gazeux exempt d'hydrogène, lesdits composés étant mélangés ou non préalablement à leur injection dans la zone réactionnelle.

Elle peut être également fabriquée dans des conditions sensiblement identiques en ajoutant au mélange réactionnel précédent au moins un élément, qui, incorporé dans la silice finalement obtenue, aura pour effet d'augmenter l'indice de réfraction de cette dernière.

Le procédé de fabrication préféré consiste essentiellement à décomposer dans la flamme d'un brûleur à plasma inductif les composés mentionnés précédemment, à les faire réagir avec l'oxygène contenu dans le gaz d'alimentation du brûleur pour former la silice dopée et la déposer sous forme de masse vitreuse sur un support stable à la chaleur.

Les caractéristiques et les avantages des fibres selon l'invention ressortiront de la description détaillée ci-après, s'appuyant notamment sur la figure qui représente schématiquement une installation de fabrication de la silice dopée qui servira de coeur auxdites fibres.

Dans le dispositif schématisé sur la figure, une enceinte pratiquement close 10 abrite de l'atmosphère ambiante le brûleur à plasma. Ce brûleur, porté sur un support réglable 12 qui permet de faire varier son orientation, comprend un tube de silice 13 entouré d'une bobine d'induction 14 reliée électriquement à un générateur 15. Il est avantageux d'opérer avec un générateur haute tension (10 kilovolts) et haute fréquence (2 mégahertz). Le tube de silice possède une extrémité fermée munie d'un ajutage 16 par lequel on introduit le ou les gaz plasmagènes tels que l'air, l'oxygène, l'argon, le protoxyde d'azote ou leurs mélanges. Il est impératif, néanmoins, de choisir un mélange de gaz contenant de l'oxygène libre ou combiné, pour assurer la formation chimique de SiO$_2$.

L'amorçage du brûleur à plasma est réalisé selon la méthode classique, en envoyant tout d'abord un courant gazeux d'argon par l'ajutage 16 et en introduisant dans le champ de la bobine d'induction une tige métallique reliée à la masse. L'argon est ensuite remplacé le plus rapidement possible par le gaz plasmagène choisi. Dans le tube de silice 13 prend alors naissance un plasma 17 qui se termine à l'extérieur par une «flamme» 18 atteignant des températures très élevées, de l'ordre de 10000°C.

Deux ajutages 19 et 20 sont disposés à l'extérieur du brûleur à plasma, de préférence de chaque côté du tube de silice 13 et transversalement à la flamme. Lesdits ajutages, dirigés vers la flamme, sont avantageusement fixés sur un support permettant de les orienter à volonté, comme représenté sur la figure pour l'ajutage 19.

L'ajutage 20 est relié par l'intermédiaire de la tubulure 21 à un évaporateur 22 contenant un composé de silicium, par exemple du tétrachlorure de silicium à l'état liquide, que l'on chauffe à l'aide du dispositif de chauffage 23. On place autour de la tubulure 21 une résistance chauffante 24 pour éviter la condensation des vapeurs de tétrachlorure de silicium qui y circulent. Un débit-mètre 25 intercalé sur le circuit indique la quantité de tétrachlorure évaporée par unité de temps. Les vapeurs de $SiCl_4$ sont entraînées, à travers l'ajutage 20, vers la flamme du plasma, par un gaz vecteur arrivant par la tubulure 26 vers l'évaporateur 22. Ce gaz vecteur est de préférence de l'oxygène mais peut être également de l'azote ou de l'argon si le gaz plasmagène est très riche en oxygène.

L'ajutage 19 est relié par l'intermédiaire de la tubulure 27 à un réservoir 28 contenant un produit fluoré sous pression ; la silice fluorée peut être obtenue avec un bon rendement en utilisant de préférence un composé minéral du fluor tel que l'hexafluorure de soufre $SF_6$, le trifluorure d'azote $NF_3$, ou leurs mélanges. La tubulure 27 est munie d'un manodétendeur 29 et d'un débit-mètre 30.

En outre, on peut introduire un gaz vecteur tel que de l'oxygène sec par la tubulure 31.

Les ajutages 19 et 20 sont également reliés par les tubulures 32 et 33 à un évaporateur 34 contenant un composé d'un élément augmentant l'indice de réfraction de la silice ; ce composé peut être un composé de titane, par exemple le tétrachlorure de titane $TiCl_4$.

Cet évaporateur 34, chauffé par un dispositif 35, est relié en amont par la tubulure 36 à une source de gaz vecteur, entraînant les vapeurs de $TiCl_4$ : la composition de ce gaz est identique à celle du gaz arrivant par la tubulure 26. Un débit-mètre 37 indique la quantité de tétrachlorure évaporé par unité de temps. Des résistances chauffantes 38 permettent d'éviter la condensation des vapeurs de $TiCl_4$ sur les parois des tubulures 32 et 33.

Le ou les gaz vecteurs, de même que le ou les gaz plasmagènes doivent être rigoureusement secs.

L'élaboration du lingot de silice contenant du fluor est effectuée par dépôt axial de ladite silice sur une ébauche 40 de silice vitreuse de qualité ordinaire. Cette ébauche est portée par un dispositif mobile 41, qui comprend des organes permettant de la placer devant la flamme 18, et de la déplacer en translation par rapport à celle-ci ; elle est de plus entraînée en rotation pendant toute la durée de l'opération par un montage mécanique de type connu comportant un mandrin 42. Cette rotation est nécessaire pour obtenir un lingot cylindrique de diamètre régulier.

Pour obtenir un dépôt de verre homogène et transparent il est important d'opérer dans des conditions stables, en conservant notamment les vitesses de translation et de rotation de l'ébauche.

Par l'ouverture et la fermeture appropriées des vannes 50 à 57, il est possible de réaliser au choix, par croissance axiale sur l'ébauche 40, une silice simplement dopée au fluor ou une silice enrichie par l'oxyde d'un élément augmentant son indice de réfraction, ainsi qu'une quantité contrôlée de fluor.

La longueur du lingot finalement obtenu est comprise entre 30 et 100 centimètres et son diamètre entre 70 et 90 millimètres. Si le lingot est formé d'une silice enrichie par l'oxyde d'un élément augmentant son indice de réfraction, il est possible, dans une deuxième phase, de le recouvrir par un dépôt radial de silice simplement dopée au fluor puis une couche de protection en silice pure. Ceci est obtenu en montant le lingot sur un tour verrier qui l'entraîne en rotation tout en se déplaçant par un mouvement de va-et-vient, perpendiculairement à la flamme du plasma.

Le lingot est ultérieurement placé dans un four d'étirage vertical pour être transformé en baguettes transparentes de plusieurs mètres de long et dont le diamètre peut être choisi entre 10 et 20 millimètres. Ces baguettes à leur tour, après un nettoyage soigné de leur surface, sont étirées par des moyens connus sous forme de fibres de 0,125 à 1 millimètre de diamètre.

Les fibres optiques selon l'invention sont illustrées ci-après par des exemples pris dans deux catégories de fibres : celles présentant un revêtement «plastique» et celles entièrement en verres de différentes compositions.

Appartiennent à la première catégorie des fibres étirées à partir de lingots de silice dopée uniquement au fluor, selon des teneurs pondérales comprises entre 0,2 et 1%. Le coeur des fibres, constitué de silice contenant un pourcentage uniforme de fluor, est simplement entouré, selon une méthode connue en soi, d'une gaine de résine silicone classique gainée à son tour par un revêtement de protection.

Des fibres de ce type, référencées F1, F2, F3, F4, dans le tableau I, contiennent respectivement 0,2%-0,45%-0,8%-1% de fluor (exprimés en pourcentages pondéraux). Le coeur de ces fibres d'un diamètre de 200 μm est recouvert par une couche de résine silicone de 50 μm, recouverte à son tour par un revêtement de protection dont l'épaisseur est de 150 μm.

Ces fibres sont comparées à des fibres classiques, désignées par A et B, gainées de la même manière et dont le coeur est constitué respectivement de silice synthétique pratiquement pure contenant environ 30 ppm (parties par million) : de groupes hydroxyles et de silice synthétique contenant entre 200 et 250ppm de groupes hydroxyles.

Le tableau I ci-après rassemble les valeurs initiales de l'atténuation présentée par ces fibres, en dB/km, pour différentes longueurs d'onde.

Tableau I

|         | A   | B    | F1   | F2   | F3   | F4  |
|---------|-----|------|------|------|------|-----|
| 630 nm  | 25  | 15   | 20   | 17   | 11   | 10  |
| 800 nm  | 4,8 | 5    | 3,5  | 4,5  | 4    | 3,5 |
| 820 nm  | 4,9 | 5,1  | 3,5  | 3,2  | 3,2  | 3   |
| 945 nm  | 35  | > 50 | 25,4 | 24,5 | 16,8 | 7,5 |
| 1050 nm | 5,6 | 8    | 4,3  | 5,7  | 6,8  | 5,1 |

La lecture de ce tableau appelle plusieurs remarques.

Tout d'abord la comparaison entre les fibres A et B montre que la présence d'ions OH dans la silice synthétique diminue fortement l'atténuation à 630 nm, confirmant ainsi les résultats ou les hypothèses déjà connus ; que, d'autre part, les mêmes ions OH provoquent une absorption à 945 nm d'autant plus marquée que leur concentration augmente, phénomène également bien connu.

La comparaison entre les fibres de l'invention et les fibres A et B montre que le fait d'incorporer du fluor dans la silice synthétique a un double effet :

– alors que la fibre A et les fibres F1 à F4 ont été étirées à partir de lingots fabriqués dans des conditions identiques, on constate, d'après les atténuations mesurées à 945 nm, que la teneur en OH décroît considérablement au fur et à mesure que la teneur en fluor augmente ;

– on constate également, d'après les atténuations mesurées à 630 nm, que l'incorporation du fluor a pour effet de réduire, voire de supprimer les défauts apparaissant normalement lors de l'étirage d'une silice contenant peu ou pas d'ions OH. Il est également remarquable que cet effet s'observe malgré la diminution de la teneur en OH.

Au-dessus de 1% de fluor l'influence de cet élément sur l'atténuation devient négligeable, notamment à 630 nm où pour la fibre F4 les pertes mesurées sont dues pour l'essentiel à la diffusion Rayleigh.

Les fibres selon l'invention présentent une résistance remarquable à l'action de tous les rayonnements ionisants, ou plus exactement, recouvrent rapidement leurs propriétés initiales. Cela est mis en évidence par l'expérience suivante réalisée, à titre d'exemple, sur les fibres précédemment décrites.

Les fibres classiques A et B ainsi que les fibres F1, F2 et F4 ont été exposées pendant une heure à un rayonnement γ (source de cobalt 60). La dose moyenne reçue par les fibres à l'issue de cette exposition a été de l'ordre de 100 000 rads. Le tableau suivant montre l'évolution de l'atténuation en fonction du temps immédiatement après la fin de ce traitement. Les valeurs figurant dans ce tableau sont exprimées en dB/km et résultent de mesures effectuées à 800 nm.

Tableau II

|          | A     | B     | F1    | F2    | F4    |
|----------|-------|-------|-------|-------|-------|
| + 2 nm   | ⩾ 550 | ~ 215 |       |       | ~ 120 |
| + 5 nm   | ⩾ 550 |       |       |       | ~ 85  |
| + 15 nm  | ⩾ 550 |       |       |       | ~ 80  |
| + 30 nm  | ⩾ 550 | ~ 200 |       | ~ 120 | ~ 75  |
| + 60 nm  | ⩾ 550 | ~ 190 | ~ 125 | ~ 100 | ~ 40  |

Aussitôt après la fin de l'exposition au rayonnement ionisant les fibres se distinguent par des atténuations très différentes ; on retrouve l'effet bénéfique des ions OH décrit dans l'art antérieur (comparaison A, B) mais surtout on observe sur les fibres selon l'invention une diminution très rapide de l'atténuation. Cette évolution est d'autant plus marquée que la teneur en fluor est plus élevée.

Dans le domaine des fibres optiques comprenant un coeur en silice synthétique dopée par un oxyde augmentant l'indice de réfraction, entourée d'une ou plusieurs couches de verres de silice de compositions différentes, les fibres optiques selon l'invention se distinguent aussi par des propriétés remarquables.

Ainsi il est connu d'utiliser dans le proche infra-rouge des fibres optiques dont le coeur est constitué de silice dopée au titane, car elles présentent une faible atténuation dans les gammes de longueurs d'onde comprises entre 1000 et 1200 nm et entre 1500 et 1700 nm.

Ces fibres présentent par contre une atténuation trop importante au dessous de 800 nm pour être utilisées dans le domaine des faibles longueurs d'onde.

Les propriétés de ces fibres peuvent être partiellement améliorées grâce à un traitement thermique qui consiste à les soumettre à une température supérieure à 150°C pendant plusieurs jours.

Ce traitement a pour effet d'améliorer sensiblement la transmission desdites fibres entre environ 700 et 800 nm, mais présente toutefois l'inconvénient de faire apparaître un bande d'absorption intense, centrée sur 950 nm, et s'étendant de 800 à 1100 nm.

Ainsi que le montrent les exemples décrits ci-après les fibres optiques selon l'invention échappent pour l'essentiel aux inconvénients précités.

Des fibres référencées TF1 et TF2 dans le tableau suivant comprennent un coeur de silice synthétique dopée simultanément par du titane et du fluor recouvert par une couche de silice uniquement dopée au fluor, cette dernière étant à son tour recouverte d'une couche de silice non dopée servant uniquement à la protection mécanique de la fibre. Le coeur, d'un diamètre de 200 μm, est recouvert d'une première couche de 45 μm d'épaisseur.

Le coeur de ces fibres contient respectivement 0,2% de fluor associé à 2,25% de $TiO_2$ (TF1) et 0,4% de fluor associé à 1,55% de $TiO_2$ (TF2), l'ensemble étant exprimé en pourcentages pondéraux.

Les fibres selon l'invention sont comparées à une fibre connue, référencée C, dont le coeur est constitué de silice synthétique dopée par 3% en poids de $TiO_2$.

Le tableau III ci-après rassemble les valeurs de l'atténuation (en dB/km) présentée par ces fibres avant et après un traitement thermique à différentes longueurs d'onde. Ce traitement a consisté à soumettre ces fibres à des températures supérieures ou égales à 170°C pendant au moins 3 jours.

Tableau III

| | C | | TF1 | | TF2 | |
|---|---|---|---|---|---|---|
| | vierges | traitées | vierges | traitées | vierges | traitées* |
| 630 nm | >100 | >100 | 50 | 10 | 35 | 17 |
| 800 nm | 30 | 12,5 | 11 | 8,5 | 22 | 12 |
| 950 nm | 20 | >100 | 27 | 40 | 33 | 25 |
| de 1100 à 1200 nm (valeur moyenne) | 10 | 8 | 6 | 7 | 7 | 3,5 |
| 1300 nm | >100 | >100 | 15 | 16 | 12 | 5 |
| 1600 nm | 11 | 7,5 | 6,5 | 1,7 | | 2 |

* Les valeurs de l'atténutation présentée par la fibre TF2 après traitement thermique sont obtenues après correction des pertes dues aux microcourbures.

La fibre C présente quelques zones d'atténuation moyenne ou faible enserrées entre des pics d'absorption forte ou très forte centrés sur 630, 945 et 1350 nm.

Comparativement à elle ce tableau met en évidence la transparence remarquables des fibres selon l'invention.

Les fibres selon l'invention se distinguent par des zones plus nombreuses et plus larges d'atténuation faible ou très faible, surtout après traitement thermique. Ainsi l'absorption à 630 nm due aux défauts apparaissant lors du fibrage décroit considérablement pour disparaître pratiquement après traitement thermique; l'absorption à 950 nm est beaucoup moins marquée. Il apparaît à 130 nm une nouvelle zone se caractérisant par une atténuation suffisamment faible pour permettre l'utilisation de cette longueur d'onde. D'une façon générale toutes les atténuations sont réduites pour atteindre parfois des valeurs extrêmement faibles.

L'action du fluor est manifeste même pour de faibles pourcentages ; il est ainsi possible d'obtenir une amélioration subtantielle des propiétés de la silice de coeur san subir les inconvénients entraînés par des teneurs trops fortes en fluor, à savoir un écart trop faible entre les indices de réfraction du coeur et de la couche qui l'entoure.

La concentration en titane et en fluor du coeur des fibres optique TF1 et TF2, données à titre d'exemples non limitatifs, est uniforme. Il est possible, tout en demeurant dans le cadre de l'invention, de réaliser des fibres dont le coeur contient une teneur uniforme de fluor, associé à des concentrations en élément dopant (par exemple titane, germanium, phosphore) décroissant radialement depuis l'axe de ladite fibre. D'une façon générale l'équilibre entre l'élément dopant augmentant l'indice de réfraction de la silice de coeur et le fluor est à déterminer en fonction de la nature dudit élément et des caractéristiques désirées pour la fibre.

Il est bien évident que si la description précédente a privilégié les fibres de transmission optique, la présente invention s'applique à tout guide d'onde optique dont la structure est similaire.

## Revendications

### Revendications pour l'Etat Contractant : LU

1. Guide d'onde optique formé d'un coeur constitué d'un verre de silice synthétique contenant du fluor et pratiquement exempte de groupes hydroxyles, dont l'indice de réfraction est supérieur à l'indice de réfraction des zones qui l'entourent, caractérisé en ce que ledit coeur présente une répartition uniforme du fluor.

2. Guide d'onde optique selon la revendication 1, caractérisé en ce que l'indice de réfraction du coeur est constant.

3. Guide d'onde optique selon l'une des revendications précédentes, caractérisé en ce que le coeur dudit guide d'onde est constitué d'un verre contenant exclusivement de la silice et du fluor.

4. Guide d'onde optique selon la revendication 3, caractérisé en ce que le pourcentage de fluor incorporé dans la silice est au moins égal à 0,5% en poids et de préférence supérieur ou égal à 0,8% en poids.

5. Guide d'onde optique selon l'une des revendications 1 et 2, caractérisé en ce que le verre à base de silice synthétique formant le coeur dudit guide d'onde contient au moins un oxyde d'un élément qui augmente l'indice de réfraction dudit verre.

6. Guide d'onde optique selon la revendication 5, caractérisé en ce que l'élément qui augmente l'indice de réfraction du verre, présente une concentration décroissant depuis l'axe dudit guide d'onde.

7. Guide d'onde optique selon la revendication 5, caractérisé en ce que l'élément augmentant l'indice de réfraction du verre formant le coeur dudit guide d'onde est le titane.

8. Guide d'onde optique selon la revendication 7, caractérisé en ce que le pourcentage de fluor incorporé est de préférence inférieur ou égal à 0,5% en poids.

## Claims

### Claims for the following Contracting State : LU

1. Optical waveguide formed by a core constituted by a synthetic silica glass, which contains fluorine and is substantially free from hydroxyl groups, whose refractive index is above that of the zones surrounding it, characterized in that the core has a uniform fluorine distribution.

2. Optical waveguide according to claim 1, characterized in that the refractive index of the core is constant.

3. Optical waveguide according to one of the preceding claims, characterized in that the core of said waveguide is constituted by a glass containing solely silica and fluorine.

4. Optical waveguide according to claim 3, characterized in that the percentage of fluorine incorporated into the silica is at least equal to 0.5% by weight and is preferably equal to or above 0.8% by weight.

5. Optical waveguide according to one of the claims 1 and 2, characterized in that the synthetic silica-based glass forming the core of said waveguide contains at least one oxide of an element increasing the refractive index of said glass.

6. Optical waveguide according to claim 5, characterized in that the element increasing the refractive index of the glass has a concentration decreasing from the axis of said waveguide.

7. Optical waveguide according to claim 5, characterized in that the element increasing the refractive index of the glass forming the core of said waveguide is titanium.

8. Optical waveguide according to claim 7, characterized in that the incorporated fluorine percentage is preferably equal to or below 0.5% by weight.

## Ansprüche

### Ansprüche für folgenden Vertragsstaat : LU

1. Lichtwellenleiter mit einem Kern aus einem praktisch hydroxylgruppenfreien Glas aus synthetischer, Fluor enthaltender Kieselsäure, dessen Brechungskoeffizient größer ist als der Brechungskoeffizient der den Kern umgebenden Zonen, **dadurch gekennzeichnet**, daß der Kern eine gleichmäßige Fluor-Verteilung aufweist.

2. Lichtwellenleiter nach Anspruch 1, **dadurch gekennzeichnet**, daß der Kern einen konstanten Brechungskoeffizienten aufweist.

3. Lichtwellenleiter nach einem der voraufgehenden Ansprüche, **dadurch gekennzeichnet**, daß der Kern des Wellenleiters aus einem Glas besteht, das ausschließlich Kieselsäure und Fluor enthält.

4. Lichtwellenleiter nach Anspruch 3, **dadurch gekennzeichnet**, daß der Prozentgehalt an Fluor, welches in der Kieselsäure eingebaut ist, mindestens gleich 0,5 Gew.-% und vorzugsweise höher oder gleich 0,8 Gew.-% beträgt.

5. Lichtwellenleiter nach einem der Ansprüche 1 und 2, **dadurch gekennzeichnet**, daß das den Kern des Lichtwellenleiters bildende Glas auf Basis von synthetischer Kieselsäure wenigstens ein Oxid eines den Brechungskoeffizienten des Glases erhöhenden Elements enthält.

6. Lichtwellenleiter nach Anspruch 5, **dadurch gekennzeichnet**, daß das den Brechungskoeffizienten des Glases erhöhende Element eine von der Achse des Wellenleiters ausgehend abnehmende Konzentration aufweist.

7. Lichtwellenleiter nach Anspruch 5, **dadurch gekennzeichnet**, daß das den Brechungskoeffizienten des den Kern des Wellenleiters bildenden Glases erhöhende Element Titan ist.

8. Lichtwellenleiter nach Anspruch 7, **dadurch gekennzeichnet**, daß der Prozentgehalt des eingebauten Fluors vorzugsweise weniger oder gleich 0,5 Gew.-% beträgt.